# EUROPEAN PATENT SPECIFICATION

(11) **EP 3 821 696 B1**
(45) Date of publication and mention of the grant of the patent: **07.06.2023**
(21) Application number: 20207118.9
(22) Date of filing: 12.11.2020
(51) Int. Cl.: A01G 17/02, A01D 46/26

(54) **IMPROVED THINNER DEVICE AND RELATED AGRICULTURAL MACHINE**
VERBESSERTE ENTLAUBUNGSVORRICHTUNG UND LANDWIRTSCHAFTLICHE MASCHINE
DISPOSITIF D'EFFEUILLAGE AMÉLIORÉ ET MACHINE AGRICOLE ASSOCIÉE

(30) Priority: 14.11.2019 IT 201900021138
(43) Date of publication of application: 19.05.2021
(73) Proprietor: B.M.V. S.r.l., 12051 Alba (CN) (IT)
(72) Inventor: BORIO, Stefano, 12051 ALBA (CN) (IT)
(74) Representative: Boario, Enrico

(56) References cited:
- FR-A1- 2 965 702
- GB-A- 1 460 773
- IT-A1- BO20 110 207
- IT-A1- BO20 110 480
- IT-A1- MO20 120 270

## Description

The present invention relates to a thinner device for thinning out vegetative elements protruding from branches of vegetable plants, in particular trees, e.g. fruit trees. Said protruding vegetative elements are buds, flowers and/or fruits. The device according to the present invention is therefore used for thinning out the protruding vegetative elements that are present on the branches of the plant to reduce their total number, while preserving an adequate number thereof for their development into flowers and fruits and/or for their subsequent complete ripening.

It is known that selective thinning of flowers and/or (unripe) fruits improves the ripening and quality of the remaining fruits, so that higher quality fruits can be obtained despite lower productivity in terms of number and/or weight.

Patent application US20130326942 discloses a device for removing flowers from a fruit tree by removing said flowers from the branches of the plant. The device comprises a shaft whereon an idle roller is mounted. Said roller comprises fibers in the form of bristles. The motion of the shaft along an axis induces the rotation of the roller, so that the bristles will hit the flowers, thereby thinning them out. Such a solution has the drawback that the proper operation of the device is dependent on the motion of the shaft, and hence on the operator who is moving said shaft. Therefore, the solution described and illustrated in such document appears to be hardly implementable on an agricultural machine, in particular, it may suffer from several technical problems, for example, for it to operate correctly it is necessary that the vehicle travels at a constant and relatively high speed, regardless of the conditions of the ground whereon the agricultural machine is travelling. Moreover, such a solution has a non-negligible transient period before it starts operating appropriately. In addition, when working along rows it will not ensure, as a result of such transient periods, a regular action upon all the trees in the row, particularly at the beginning and at the end of each row. Furthermore, such a solution is strictly dependent on the density and flexibility of the bristles of the machinery. Therefore, the bristles will have to be properly selected as a function of the type of plant and/or protuberance to be thinned out.

From document FR2965702 a device is also known which has a drum mounted freely in rotation with a vertical rotation axis, and connected on a displacement unit, e.g. a tractor, and equipped with working arms driven in rotation. The arms carry a wire. A stopping unit is utilized for stopping the rotation of the drum. The wire is radially assembled with respect to the arm. The drum includes two faces, where the arms are assembled and fixed in angular displacement with respect to the corresponding faces. The drum is suspended with a gantry. This patent application has the same drawback described with reference to the preceding prior-art document, in that the drum rotates idle, thus posing all of the above-described problems. Moreover, the document describes the implementation of a hydraulic system for rotating the arms about their longitudinal axis. Such a solution turns out to be particularly disadvantageous, in that any fluid leaking from the hydraulic circuit would inevitably pollute the plant being thinned out, in addition to the fact that such a type of movement will not ensure a regular action along the entire vertical extension of the plant, due to the structural limitation dictated by the distance between the arms.

Patent application CN103404379 discloses a self-propelled intelligent flower thinning machine for orchard. The device comprises a traveling unit, a navigation unit, a remote control unit and a flower thinning unit. The navigation unit is composed of a controller, a steering wheel servo motor, a steering wheel motor driver, ultrasonic wave sensors, a front wheel angle sensor and a speed sensor, and is used for controlling the automatic traveling of the traveling unit around fruit trees. The remote control unit is composed of a remote control antenna and a controller, and is used for controlling the traveling of the traveling unit among the fruit trees. The flower thinning unit is mainly composed of a flower thinning motor, a coupler, a rotation shaft and flower thinning plastic strips. Such thinning machine is capable of adjusting the operation height, the angle of the flower thinning unit, and the number and position of the flower thinning strips according to the types of fruit trees to be thinned out. The navigation unit and the remote control unit are so arranged as to achieve flower and fruit thinning. According to this solution, the strips move relative to the axis of rotation of the drum whereon the arms are mounted. The same strips are not moved continuously relative to another axis to ensure a regular thinning action. Moreover, this document is mostly focused on the vehicle, not on the features of the thinning device.

Furthermore, it must be pointed out that fruit harvesting or picking machines, as well as suckers removing machines, are designed to perform an invasive action upon the vegetable plant, so as to completely remove all the vegetative elements from the vegetable plant; therefore, such technology would be hardly applicable for thinning out vegetative elements, particularly buds and flowers. For example, a machine is known from patent application US2008060335 for managing shoots of vines arranged on a trellis, the machine comprising: a frame that has two spaced apart uprights, the frame being arranged to straddle the trellis, each upright supporting a brush that is rotatable to contact shoots extending from the vines; and a drive mechanism for imparting rotational motion to each brush, such that, in use, the brushes rotate on opposing sides of the trellis to contact and remove shoots from the vine as the machine is advanced along the trellis. Such type of machine is not applicable for the purpose of thinning out flowers and/or fruits because it cannot simply reduce the number of flowers or fruits, since it completely removes the vegetative element.

It must also be pointed out that the thinning device and the agricultural machine with which it may be associated should be so designed as to obtain an efficient device and an efficient machine, wherein the vibrations of the device and of the machine, and in particular of the devices comprised therein, are reduced while still allowing the remover elements to make movements relative to distinct axes of rotation, thus simplifying the drive system.

The present invention aims at solving the problems suffered by the prior art by proposing an innovative solution applicable to several types of plants and several types of vegetative elements to be thinned out.

The solution according to the present invention combines different movements of the remover elements, so that the thinning action performed upon the vegetative elements can be controlled in a more accurate and regular manner by means of a simple drive system, with reduced vibration of the device.

One aspect of the present invention relates to a thinner device having the features set out in the appended claim 1.

A further aspect of the present invention relates to an agricultural machine having the features set out in the appended claim 12.

The features and advantages of the device and machine will become apparent from the following description of several possible embodiments thereof, provided herein by way of non-limiting example, as well as from the annexed drawings, wherein:
- Figure 1 shows an axonometric view of one possible embodiment of at least one portion of an agricultural machine comprising the thinner device according to the present invention;
- Figure 2 shows a schematic view of a sectioned portion of a thinner device of the present invention according to a preferred embodiment thereof;
- Figures 3A and 3B are schematic sectional top views of a portion of the thinner device, showing some details of the second mechanism, and in particular of a part of the kinematic mechanism, in different configurations; in particular, Figure 3A shows the kinematic mechanism in a retracted configuration; Figure 3B shows the kinematic mechanism in a projecting configuration;
- Figures 4A and 4B are schematic sectional side views of a portion of the body of the thinner device of Figures 2-3B, and in particular of a part of the kinematic mechanism, in different configurations; in particular, Figure 4A shows the kinematic mechanism in a retracted configuration; Figure 4B shows the kinematic mechanism in a projecting configuration;
- Figure 5 schematically shows the electric and electronic connection of the control unit of the thinner device according to the present invention.

With reference to the above-mentioned figures, reference numeral 3 designates as a whole the thinner device.

Reference numeral 1 designates an agricultural machine as a whole, or at least a portion thereof, which may comprise a thinner device 3 according to the present invention.

Thinner device 3 according to the present invention is particularly suitable for thinning out vegetative elements protruding from branches of vegetable plants, e.g. trees; in particular, vegetative elements on fruit trees.

For the purposes of the present description, the generic term vegetative elements refers to buds, flowers and/or fruits, in particular unripe ones, protruding from the branches of a vegetable plant, which may be, for example, a tree, in particular a fruit tree.

For the purposes of the present description, thinning refers to partial removal, as opposed to total removal, of vegetative elements to allow the remaining elements to continue their development and come to complete ripening.

Thinner device 3 according to the present invention comprises a body 4, which substantially extends along an axis "X". Said body 4 comprises, in turn, an external structure 41.

Thinner device 3 according to the present invention comprises a plurality of remover elements 5. Said remover elements 5 are adapted to act upon the vegetative elements for thinning the vegetative elements protruding from the branches of the vegetable plants. Therefore, the action of said remover elements 5 provides the effect of thinning out the vegetative elements that are present on the branches of the plants.

Said remover elements 5 project from said body 4, in particular from external structure 41 of said body 4, thereby defining a respective longitudinal axis "L".

In some possible illustrative, but non-limiting, embodiments, each remover element 5 extends at least along a direction substantially perpendicular to said axis "X", which may be perpendicular to the external structure 41 or may have any inclination, even tangent to said external structure 41, or such that during its oscillatory motion it can assume a position perpendicular to said axis "X", or each remover element 5 extends along a direction which is inclined relative to a plane perpendicular to said axis "X". In this latter embodiment, remover elements 5 may extend at any desired angle of inclination.

Thinner device 3 according to the present invention comprises a drive system 6. Said drive system 6 comprises, in turn, at least one first mechanism 65 and at least one second mechanism 7.

Said at least one first mechanism 65 is adapted to at least cause at least said body 4 and said remover elements 5 to rotate in a controlled and/or assisted manner relative to said axis "X". Preferably, said body 4 and said remover elements 5 rotate at the same speed, e.g. they rotate integrally.

In addition, said second mechanism 7 is adapted to move said remover elements 5; in particular, said second mechanism 7 is adapted to cause each remover element 5 to oscillate relative to said external structure 41 of body 4, in particular about a respective axis. In some possible illustrative, but non-limiting, embodiments, the respective axis about which remover element 5 oscillates may be substantially perpendicular to longitudinal axis "L" of each remover element 5, i.e. even with an angle of inclination relative to the perpendicular, or may be an axis at any angle of inclination relative to longitudinal extension "L" of the remover elements, or even parallel to said longitudinal axis "L"; preferably, also when said longitudinal axis "L" of remover element 5 is not perpendicular to said axis "X", the axis about which remover element 5 oscillates lies in a plane substantially perpendicular to said axis "X".

Through said drive system 6, thinner device 3 according to the present invention is therefore capable of moving said remover elements 5 by causing them to rotate about axis "X" and also to oscillate, relative to external structure 41 of body 4, about a respective axis, e.g. about an axis substantially perpendicular to longitudinal axis "L". Such dual drive of uremover elements 5 facilitates the process of thinning out the vegetative elements on the branches of the vegetable plants, ensuring a regular action upon the vegetable plant without causing any damage to the same vegetable plant, the damage that might otherwise be caused by said remover elements 5 being, for example, as is known in the art, damage to the branches of the vegetable plant and/or to the remaining vegetative elements, or complete removal of the vegetative elements from the branches of the vegetable plant.

For the purposes of the present description, the definition according to which each remover element 5 oscillates about a respective axis substantially perpendicular to longitudinal axis "L" of each remover element also means that, when said longitudinal axis "L" of remover element 5 is not perpendicular to said axis "X", the same axis lies in a plane perpendicular to said axis "X" in a position taken by remover element 5 during its oscillatory motion.

Preferably, said second mechanism 7 comprises: a shaft 71 and a kinematic mechanism 72.

Said shaft 71 extends along said axis "X", and the same shaft 71 is adapted to rotate about said axis "X".

Said kinematic mechanism 72 is connected between said shaft 71 and said remover elements 5. Said kinematic mechanism 72 is therefore adapted to cause each remover element 5 to oscillate about its respective axis.

In particular, said kinematic mechanism 72 is capable of converting the rotary motion imparted by shaft 71, so as to cause said remover elements 5 to oscillate, e.g. about an axis substantially perpendicular to said longitudinal axis "L".

In general, the present solution makes it possible to obtain, through said drive system 6, both an oscillatory, preferably non-rotary, motion of remover elements 5 relative to external structure 41 of body 4 and a rotary motion of remover elements 5 about said axis "X".

In one possible illustrative, but non-limiting, embodiment, each remover element 5 comprises a connection portion 50. Said connection portion 50 is pivoted to external structure 41. Said connection portion 50 of the remover element 5 is pivoted to the external structure 41 in a manner such that said remover element 5 will oscillate about a pivot axis "P".

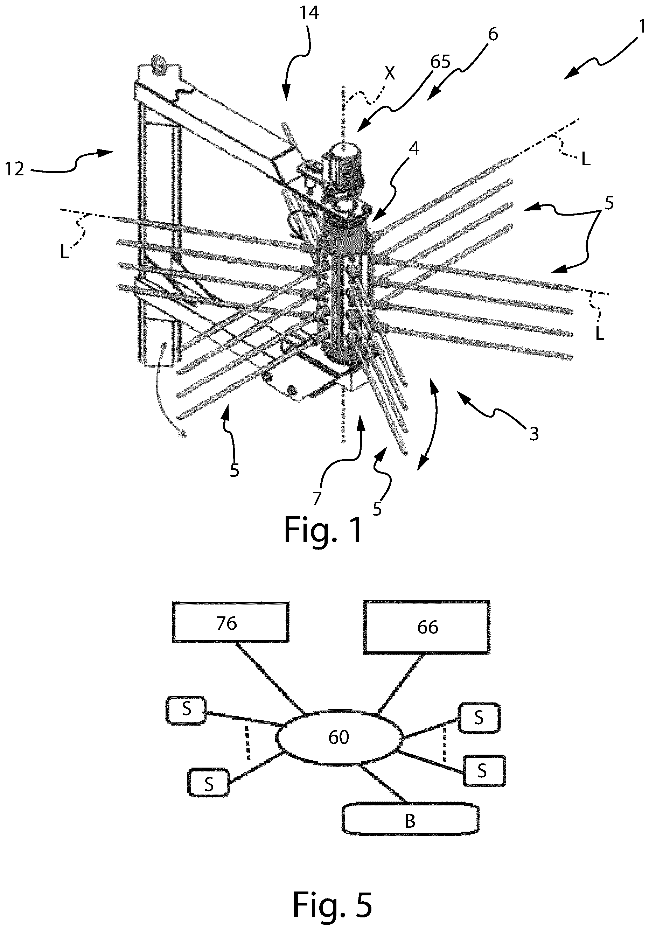

In one possible embodiment, said remover element 5 preferably oscillates about an axis substantially perpendicular to longitudinal axis "L" of each remover element 5. In such embodiment, each pivot "P" extends along an axis perpendicular to the extension or longitudinal axis "L" of the corresponding remover element 5. Even more preferably, said pivot "P" is perpendicular to longitudinal axis "L" of remover element 5 and also to said axis "X". In one possible embodiment, as shown by way of example in Figure 1, each remover element 5 oscillates relative to a respective axis perpendicular to said longitudinal axis "L".

In a preferred, but non-limiting, embodiment, said plurality of remover elements 5 are divided into groups. Each group of remover elements 5 is fixed to a respective support structure 52. Each support structure 52 is pivoted to external structure 41 in a manner such that it will oscillate about a pivot axis "P". Preferably, said pivot "P" is substantially perpendicular to said axis "X"; preferably, said pivot "P" is also substantially perpendicular to longitudinal axes "L" of remover elements 5 connected to a support structure 52.

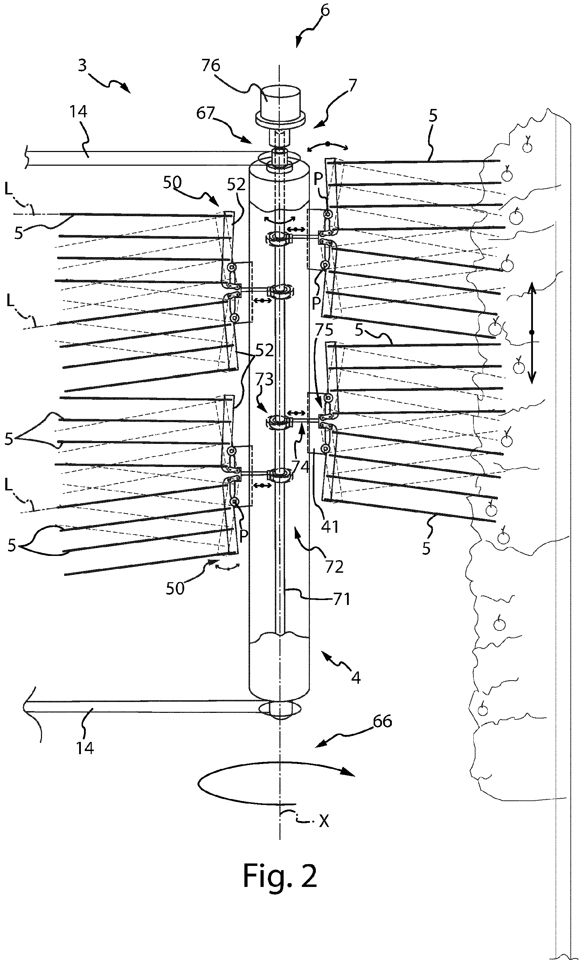

The embodiment that comprises said support structures 52 permits moving, with a single kinematic mechanism 72, a plurality of remover elements 5, which are in turn connected to a respective support structure 52, e.g. as shown in the embodiment illustrated in Figure 2.

In a preferred embodiment, the dimensions and shape of each remover element 5 are independent of the type of vegetative element to be thinned out and/or of the type of plant, since the same remover elements 5 can be used for thinning out different types of vegetative elements and/or for different types of vegetable plants.

In one possible alternative embodiment, the material, the longitudinal extension and the diameter of each remover element 5 are predefined as a function of the type of vegetative element to be thinned out and/or of the type of vegetable plant whereon it will have to be used.

Preferably, said connection portion 50 is located at a first end of the longitudinal extension of remover element 5. The remaining part of the same remover element 5, in particular the part projecting from external structure 41 of body 4, is adapted to act upon the vegetative elements for thinning them out from the branches of the vegetable plant.

In the embodiment that comprises said support structure 52, remover elements 5 are connected to said support structure 52 through said connection portion 50. The remaining part of the same remover element 5, in particular, the part projecting from support structure 52, is adapted to act upon the vegetative elements for thinning them out from the branches of the vegetable plant.

In one possible embodiment, said remover elements 5 are fixed to said support structure 52 in a removable manner, so that it is possible to replace individual remover elements connected to support structure 52.

In an alternative embodiment, said support structure 52 is integral, e.g. made as one piece, with the group of remover elements 5.

Preferably, said remover elements 5 have a longitudinal conformation, e.g. a rod-like shape, and said remover elements 5 are appropriately arranged along said body 4.

Said remover elements 5 are made of plastic materials. The radial size of each remover element 5 will depend on the plastic material employed. The radial size of each remover element 5 may also depend on the desired thinning action to be obtained.

More in general, the materials used for making remover elements 5, and in particular the portion thereof adapted to act upon the vegetative elements, is such as to not cause any damage to the remaining vegetative elements, so that they can continue their growth until the fruit is fully ripe, without showing any sign of damage or undesired and unaesthetic bruises.

Preferably, said remover elements 5 are so designed that the oscillatory motion imparted on each remover element 5, by means of said second mechanism 7, will generate an oscillation of the structure of remover element 5. The present solution allows the remover element 5 to bend so as to not cause any damage to either its own structure or the vegetable plant, should remover element 5 hit the branches of the vegetable plant and/or the vegetative elements left on the branches of the vegetable plant.

In some alternative embodiments (not shown), each remover element 5 has a branched conformation, comprising one or more branches to increase the area of remover element 5 capable of acting upon the vegetative elements and thinning them out, while making the thinning action even more regular. In a further illustrative, but non-limiting, embodiment, from said connection portion 50 of remover element 5 a plurality of elongate elements extend in the form of bristles to generate a remover element 5.

In general, said remover elements 5 may have a constant or variable cross-section, e.g. the cross-section may decrease from the distal end of remover element 5 towards the end proximal to body 4.

In one possible illustrative embodiment, said remover elements 5 are preferably arranged in rows, as shown by way of example in Figure 1, wherein said rows of remover elements 5 extend along directions parallel to said axis "X", preferably throughout the extension of external structure 41 of body 4, suitably spaced apart angularly, and protrude axially from external structure 41 of body 4.

In an alternative embodiment, said remover elements 5 are organized into divisions, each division being composed of groups, and each group being fixed to said support structure 52, as shown by way of example in Figure 2. The divisions are suitably spaced apart angularly around external structure 41 of body 4, and the same divisions are mutually offset along axis "X", thus assuming, for example, a helical configuration around said body 4.

The groups of remover elements comprised in each division are suitably spaced apart; in particular, the groups are suitably spaced apart as a function of the number of kinematic mechanisms 72 utilized for moving them. Preferably, remover elements 5 associated with a support structure 52 are equidistant.

By way of non-limiting example, each support structure 52 may comprise a number of remover elements 5 in the range of 2 to 20, e.g. 3 to 8, preferably 4 or 5.

Each division may comprise 1 to 6 support structures 52, e.g. 2 or 4.

Furthermore, each thinner device 3 may comprise a number of angularly equidistant and axially offset divisions in the range of 2 to 16, e.g. 4 to 12, preferably 6 or 8.

Remover elements 5 associated with each support structure 52 may be mutually aligned and/or offset and/or arranged at different angles.

More in general, through drive system 6 it is possible to control and adapt the motion of remover elements 5 according to specific requirements.

In one possible illustrative, but non-limiting, embodiment of thinner device 3 according to the present invention, said kinematic mechanism 72 comprises: a plurality of eccentric elements 73; a plurality of rods 74; and a plurality of connection linkages 75.

Said eccentric elements 73 are suitably arranged along said shaft 71.

Each rod 74 is connected to a respective eccentric element 73 and protrudes from said eccentric element 73 along a direction substantially perpendicular to said shaft 71.

Each connection linkage 75 is connected at one end to a rod 74 and at the opposite end to at least one remover element 5, or to at least one support structure 52.

In the present embodiment, the rotary motion of said shaft 71 is appropriately converted by said kinematic mechanism 72 in order to cause said remover elements 5 to oscillate.

Said eccentric element 73 is suitably keyed to shaft 71, and said rod 74 is fixed, preferably in a rigid manner, to the structure of the eccentric element. Through rolling devices, e.g. bearings, it is possible to transform the rotary motion imparted by shaft 71 into an at least partly linear motion of said rod 74.

In a preferred, but non-limiting, embodiment of connection linkage 75 of thinner device 3 according to the present invention, each connection linkage 75 comprises: a first junction element 751 and at least one second junction element 752.

Said first junction element 751 is adapted to compensate for any variations in the axis of rod 74 during the movement imparted thereon by said eccentric element 73, thereby obtaining a purely linear reciprocating motion, perpendicular to said axis "X".

Said at least one second junction element 752 is adapted to transmit the linear motion to said at least one remover element 5, or to at least one support structure 52, thereby causing it to oscillate.

The present solution makes it possible to transform a rotary motion into a linear motion, such that the desired oscillatory motion of remover elements 5 can be generated with a predefined stroke, avoiding the risk of any undesired interruption or reduction of the oscillation stroke.

Describing now more in detail the construction of a preferred, but non-limiting, embodiment, each one of said connection linkages 75 is connected at one end to a rod 74 and at the opposite end to at least one support structure 52. Said support structure 52 is pivoted to external structure 41, so that it can oscillate about a pivot axis "P", thereby causing the oscillation of a group of said remover elements 5 fixed to said support structure 52. Preferably, said pivot "P" is perpendicular to said axis "X", being preferably also substantially perpendicular to longitudinal axis "L" of remover elements 5.

In an even more preferable embodiment, each one of said connection linkages 75 is connected to two support structures 52. In such an embodiment, said support structures 52 oscillate in opposite directions, periodically moving toward and away from each other.

More generally, the periodic motion is effected by two groups of remover elements 5 being moved synchronously through a common connection linkage 75.

More generally, said at least one second mechanism 7 is designed in a manner such that said remover elements 5 will move discordantly, but in mutual static balance, in particular, the divisions of remover elements 5 will move discordantly while nevertheless ensuring that thinner device 3 will remain balanced.

Continuing the description of thinner device 3, in a preferred, but non-limiting, embodiment said second mechanism 7 comprises a motor 76. Said motor 76 is preferably a hydraulic or electric motor, e.g. a brushless motor. Said motor 76 being at least adapted to rotatably drive said shaft 71.

In one possible embodiment of thinner device 3 according to the present invention, said first mechanism 65 comprises a motor 66 and a junction portion 67.

Said motor 66 is preferably a hydraulic or electric motor, e.g. a brushless motor, preferably of the orbital type. Said motor 66 is adapted to provide controlled and/or assisted rolling of thinner device 3, and in particular of body 4 and of remover elements 5. This solution ensures an improved thinning action of the thinner device on the plants, e.g. arranged in rows.

Said junction portion 67 is connected to said body 4 and also, in an appropriate manner, to said at least one second mechanism 7, so as to cause said remover elements 5 to rotate about said axis "X". In particular, the connection between said junction portion 67 and said at least one second mechanism 7 is such as to permit the simultaneous oscillation of remover elements 5 during the rotation of remover elements 5 about axis "X" imparted by said first mechanism 65.

In one possible illustrative, but non-limiting, embodiment, by employing a suitable series of transmission members, kinematic mechanisms and/or motoreducers it is possible to use a single motor, whether hydraulic or electric, capable of driving both said first mechanism 65 and said second mechanism 7. In this latter embodiment it is necessary to ensure that the period of rotation of said remover elements 5 relative to said longitudinal axis "X" is greater than the period of oscillation of the same remover elements 5 relative to said external structure 41 of body 4.

In general, said drive system 6 preferably comprises a control unit 60. Said control unit 60 is adapted to appropriately control the motors (66, 76) comprises in thinner device 3. In particular, said control unit 60 can, as required, vary the speed of rotation about said axis "X" and/or the speed of oscillation of remover elements 5 relative to said pivot "P". In this way it is possible to adapt the speed of rotation and oscillation of remover elements 5 to the surrounding conditions, so as to keep constant the thinning effect on the vegetable plants. For example, it is possible to adjust the revolution speed as a function of the travelling speed, e.g. in an inversely or directly proportional manner, for the purpose of being certain to attain a regular thinning effect according to specific requirements. Moreover, the revolution and oscillation speed of remover elements 5 may vary as a function of the type of vegetable plant and/or of the type of vegetative element to be thinned out.

By way of example, said control unit 60 may receive signals and/or data from a plurality of sensors "S" which can determine the surrounding conditions, e.g. the traveling speed, or the performance of thinner device 3 itself, and/or from a control keyboard "B" through which one can enter data about the type of vegetable plant and/or vegetative element to be thinned out. The data entered through control keyboard "B" can be saved, for example, to a non-volatile memory medium, and used at a later time should it be necessary to set the same parameters again.

Describing now in detail the construction of one possible second mechanism 7 comprised in drive system 6 of thinner device 3 according to the present invention, a plurality of eccentric elements 73 are fixed, e.g. keyed, along said shaft 71. Preferably, said eccentric elements 73 are statically balanced, so that during the rotation of said shaft 71 no torque will be generated which may cause said shaft 71 to oscillate and/or vibrate in an undesired manner.

One end of a rod 74 is connected to each eccentric element 73. Preferably, said eccentric element 73 comprises, in addition to the actual eccentric component keyed to the shaft, also a rolling element, e.g. a bearing, and a structure adapted to contain said eccentric component and said rolling element. Said rod 74 is fixed to said structure. Said rod 74 may be fixed to said eccentric element 73 in an irremovable or removable manner, being optionally adjustable to allow changing the oscillation stroke of remover elements 5.

A connection linkage 75 is connected to the opposite end of said rod 74.

Said eccentric element 73 being adapted to rotate about said axis "X", conveniently exerting a thrust on said rod 74 along an axis perpendicular to said axis "X".

Said rod 74 transmits the linear motion toward said connection linkage 75, thus substantially generating a connecting-rod system.

In the preferred embodiment, said connection linkage 75 comprises a first junction element 751 adapted to compensate for the variations in the axis of rod 74 during the movement imparted thereon by said eccentric element 73, thereby obtaining a purely linear reciprocating motion perpendicular to said axis "X". Said connection linkage 75 further comprises at least one second junction element 752 adapted to transmit the linear motion to said at least one remover element 5, thereby causing it to oscillate, e.g. by transferring the motion either directly to each remover element 5 or through a support structure 52 to which a group of remover elements 5 is connected.

In a preferred, but non-limiting, embodiment, said connection linkage 75 comprises two second junction elements 752. Each second junction element 752 is adapted to transmit the linear motion to a respective support structure 52 pivoted to external structure 41, so that it will oscillate about an axis of a respective pivot "P". In the present embodiment, said connection linkage 75 is adapted to cause the oscillation of both groups of said remover elements 5 that are fixed to said support structures 52 in opposite directions of rotation. In the present embodiment, the two second junction elements 752 are fixed at one end to said first junction element 751. Preferably, said support structures 52 are arranged aligned along an axis substantially parallel to said axis "X", so that said remover elements 5 are aligned along an axis parallel to said axis "X".

In a preferred, though illustrative and non-limiting, embodiment, said junction element 752 is a chain link comprising two pins respectively fixed to the first junction element 751 and to support structure 52 and connected together by plates, thus ensuring the necessary mobility to impart the linear motion to support structure 52, which will thus oscillate.

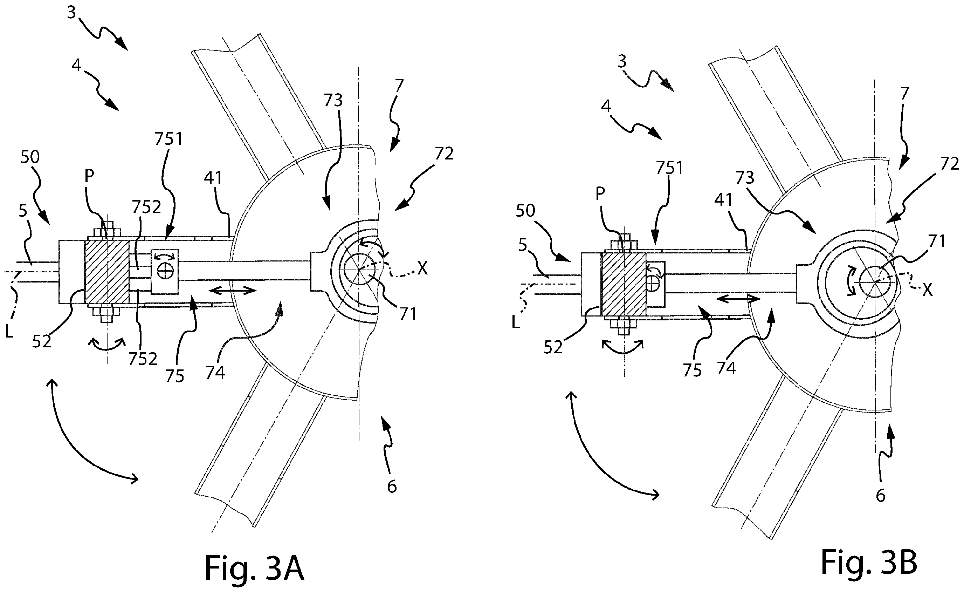

In a preferred, but non-limiting, embodiment, each support structure 52 is pivoted, through pivot "P", to a protrusion of external structure 41 of body 4, as visible in Figures 3A-4B, so as to permit a wider oscillation of support structure 52 without remover elements 5 and/or support structure 52 itself hitting external structure 41 of body 4.

In a preferred, but non-limiting, embodiment, said first mechanism 65 is located in proximity to one end of body 4 relative to said axis "X"; while said second mechanism 7 is located in proximity to the other end of body 4 relative to said axis "X", e.g. said motor 76 being located at such end and said shaft 71 extending from such end.

Whereas in the embodiment comprising a single motor for driving both mechanisms (65, 7), the same mechanisms (65, 7) extend from a common end of body 4, e.g. from the bottom end.

In general, as aforementioned, thinner device 3 according to the present invention is designed in a manner such that said at least one first mechanism 65 and said at least one second mechanism 7 are in turn designed to ensure that the period of rotation of said remover elements 5 relative to said axis "X" is greater than the period of an oscillation of the same remover elements 5 relative to said external structure 41 of body 4. In fact, the frequency of oscillation of said remover elements 5 relative to said external structure 41 of body 4 is preferably higher than the frequency of rotation of said remover elements 5 relative to said axis "X". By way of example, the ratio between the two revolution periods is in the range of 1/2 to 1/50, preferably 1/10, e.g. one revolution about axis "X" corresponds to ten oscillations relative to the axis of pivot "P". The oscillatory motion permits generating a vibration of remover elements 5.

In one possible illustrative, but non-limiting, embodiment, said at least one second mechanism 7, in particular said kinematic mechanism 72, is designed in a manner such that said remover elements 5 will move synchronously and concordantly. In this embodiment, said at least one second mechanism 7, in particular said kinematic mechanism 72, is designed to ensure that all remover elements 5 will move synchronously and concordantly.

Preferably, said at least one second mechanism 7 is designed in a manner such that said remover elements 5 will move discordantly, but in mutual static balance. In one possible embodiment, said at least one second mechanism 7, in particular said kinematic mechanism 72, is designed in a manner such that the divisions located in diametrically opposite positions around said body 4 are actuated by statically balanced kinematic mechanisms 72, preferably moving the remover elements of the different divisions in a concordant manner. Within each division, the groups of remover elements 5 will move discordantly in pairs. Moreover, two divisions of remover elements adjacent to each other around said body 4 will move the remover elements 5 in a mutually discordant manner.

More in general, said plurality of eccentric elements 73 are arranged along said shaft 71 in a manner such that the motion imparted through each eccentric element 73 will be counterbalanced by at least one other eccentric element arranged along said shaft 71, thereby balancing said second mechanism 7. In this way, the vibrations of drive system 6 will be reduced, thereby considerably improving the stability, reliability and durability of thinner device 3.

Thinner device 3 according to the present invention is particularly suitable for application to an agricultural machine 1 for working on branches of vegetable plants. In particular, thinner device 3 is applicable to agricultural machines 1 propelled either autonomously or by a tractor, which can work on branches of trees, particularly fruit trees.

Agricultural machine 1 according to the present invention is adapted to work on branches of trees, in particular fruit trees. Agricultural machine 1 comprises a main frame 12 and a support frame 14. Said main frame 12 is susceptible of being connected to a vehicle, in particular an agricultural tractor.

In a preferred embodiment (not shown), said main frame 12 comprises a drive structure. Through a suitable drive system, said drive structure permits raising, moving sideways and tilting in one or more directions at least a part of the agricultural machine, in particular support frame 14, for the purpose of adapting agricultural machine 1 to the characteristics of the vegetable plants, in particular when such plants are arranged in rows. Preferably, said drive structure is interposed between the portion of main frame 12 adapted to be connected to a vehicle and the portion of the main frame whereto support frame 14 is connected.

Said support frame 14 is configured for supporting at least one thinner device 3 according to the present invention. Said support frame 14 is configured for reducing the propagation towards main frame 12 of any vibration generated by thinner device 3. Said support frame 14 is adapted to be connected to both ends of body 4 of thinner device 3.

In some possible embodiments, said agricultural machine 1 comprises more than one thinner device 3, which may be arranged parallel to one another or, preferably, aligned along said axis "X".

Figure 1 shows an axonometric view of one possible embodiment of at least a portion of an agricultural machine 1 comprising thinner device 3 according to the present invention. In the embodiment illustrated herein by way of non-limiting example there are six rows of remover elements 5 parallel to axis "X", suitably connected to body 4. Thinner device 3 is fixed to support frame 14, which in turn is fixed to a portion of main frame 12. The assembly composed of support frame 14 and the portion of main frame 12 realizes a C-shaped structure adapted to be fixed to the ends of body 4 of thinner device 3. Such a conformation permits reducing the generation and propagation of undesired oscillations of thinner device 3 and/or of agricultural machine 1. In Figure 1 one can see one possible embodiment of the first mechanism 65 of drive system 6.

Figure 2 shows a schematic view of a preferred embodiment of a portion of a thinner device 3 according to the present invention. In this figure one can see support frame 14 supporting body 4. Through said drive system 6, said body 4 is adapted to rotate about said axis "X", the rotary motion of which is preferably imparted by an orbital motor (not shown), which is adapted to generate an assisted rolling motion of thinner device 3 along a row of fruit trees.

The sectional view of body 4 shows a portion of the second mechanism 7, which is coupled to thinner device 3 through a junction portion 67. Said second mechanism 7 comprises a shaft 71 rotatably driven by a motor 76. Said kinematic mechanism 72 is arranged along said shaft 71. The figure illustrates kinematic mechanism 72, which comprises four eccentric elements 73 appropriately spaced apart along said shaft 71. To each eccentric element 73 a rod 74 is fixed, which is in turn connected, at the opposite end, to a connection linkage 75, which allows two support structures 52 to oscillate about a respective pivot "P", pivoted to external structure 41. Each support structure 52 comprises a plurality of remover elements 5, in particular four. The continuous line indicates kinematic mechanism 72 in a projecting configuration. The dashed lines indicate the positions of eccentric elements 73, of support structures 52 and of remover elements 5 when kinematic mechanism 72 is in a retracted configuration.

The arrows shown in Figure 2 schematically indicate the possible movements of the various parts of thinner device 3 according to the present invention.

Figure 3A shows a schematic sectional top view of one possible embodiment of a portion of thinner device 3, illustrating some details of the second mechanism 7, and in particular of a part of kinematic mechanism 72 in a retracted configuration. In particular, one can see shaft 71 whereto eccentric element 73 is keyed, which is connected to a first end of rod 74. The connection linkage 75 is connected to the second end of rod 74 . In the illustrated embodiment, the first junction element 751 is connected to the second end of rod 74. The second junction element 752 is in turn connected to the first junction element 751 in the form of a chain link, suitably provided with pins. To the opposite end of the second junction element 752 support structure 52 is connected, in particular by means of pins. Said support structure 52 is pivoted, by means of pivot "P", to external structure 41, in particular, in the illustrated embodiment, to a protrusion of body 4. In the illustrated embodiment, a part of kinematic mechanism 72 and of support structure 52 is placed between two parallel plates, defining such protrusion of external structure 41 to which said support structure 52 is pivoted through pivot "P". In Figure 3A one can see the external structure 41 of body 4, comprising multiple protrusions angularly equidistant around said axis "X".

As can be inferred from the position of eccentric element 73, kinematic mechanism 72 is in a retracted configuration.

Figure 3B shows, in a schematic sectional top view like that of Figure 3A, the portion of thinner device 3 with kinematic mechanism 72 in a projecting configuration. When comparing it with Figure 3A, one can see the different position of eccentric element 73, which has moved rod 74 forward, thereby moving forward said connection linkage 75 and thus both said first junction element 751 and said second junction element, the latter being covered by support structure 52.

The reciprocating motion of kinematic mechanism 72 between the two configurations allows remover elements 5 to rotate about an axis perpendicular to their longitudinal axis "L", in particular, in the illustrated embodiment, about the axis of pivot "P".

In Figure 3B, as in Figure 3A, arrows indicate the possible movements that the second mechanism 7, in particular kinematic mechanism 72, can make.

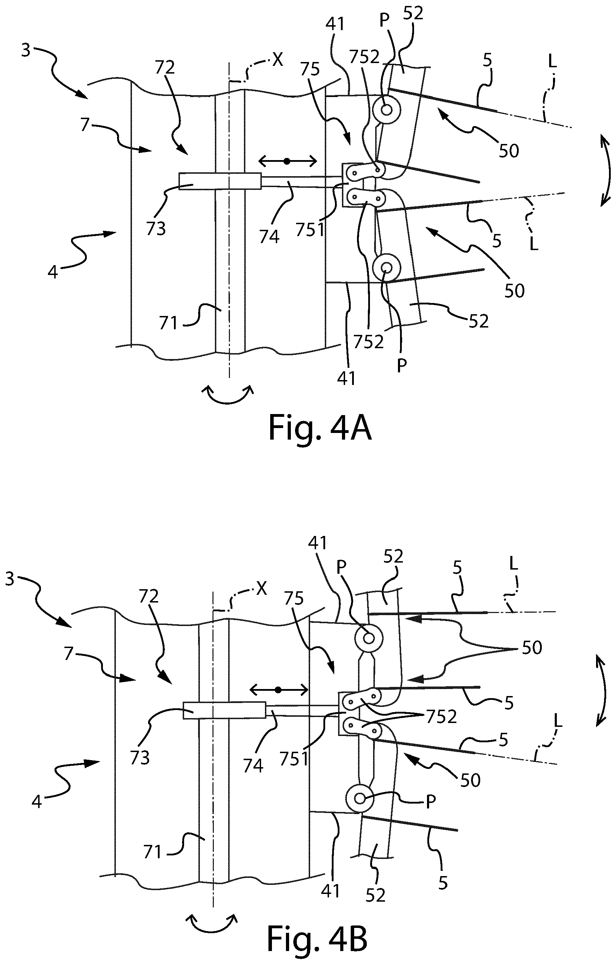

Figure 4A shows a schematic sectional side view of a portion of thinner device 3 of Figures 3A-3B, in particular of a part of kinematic mechanism 72 in a retracted configuration. As previously described with reference to Figure 3A, the figure shows the arrangement of kinematic mechanism 72, and in particular further construction details of one possible embodiment of connection linkage 75. In particular, it is possible to comprehend further construction details of the first junction element 751, in addition to those that can be inferred from Figures 3A-3B. In the embodiment illustrated in Figure 4A there are two junction elements 752, each one in the form of a chain link, each one respectively connected to a respective support structure 52. In the retracted configuration, kinematic mechanism 72 causes longitudinal axes "L" of remover elements 5 connected to the first support structure 52 to converge towards longitudinal axes "L" of remover elements 5 connected to the second support structure 52, as visible in Figure 4A.

Figure 4B shows, in a schematic sectional side view like that of Figure 4A, the portion of the thinner device 3, in particular of a part of the kinematic mechanism 72, in the projecting configuration.

As can be easily inferred through a comparison with Figure 4A, the kinematic mechanism 72 in the projecting configuration causes the longitudinal axes "L" of the remover elements 5 connected to the first support structure 52 to diverge from the longitudinal axes "L" of the remover elements 5 connected to the second support structure 52, as visible in Figure 4B.

In Figure 4B, as in Figure 4A, arrows indicate the possible movements that the second mechanism 7, in particular kinematic mechanism 72, and remover elements 5 can make. In the same figures one can also see a preferred arrangement of support structures 52, which are substantially aligned along an axis parallel to said axis "X".

Figure 5 schematically shows one possible electric and electronic connection of control unit 60 of drive system 6 of thinner device 3 according to the present invention. In this figure one can see how the motors (66, 76) comprised in the various mechanisms (65, 7) are electrically and electronically connected to control unit 60, which can drive said hydraulic or electric motors (66, 76) as required. Furthermore, said control unit 60 can advantageously be connected to a plurality of sensors "S", which make it possible to determine the best working conditions of thinner device 3, e.g. the optimal revolution speed of each motor (66, 76) comprised in drive system 6. Said sensors "S" may be adapted to determine the conditions of the environment in which thinner device 3 is operating, e.g. the traveling speed along a row, or the operating conditions of thinner device 3. Control unit 60 may advantageously be connected to a control keyboard "B", through which an operator can set the desired configuration of thinner device 3.

Thinner device 3 according to the present invention makes it possible to obtain a thinning of the vegetative elements of 10% to 50%, preferably 20% to 40%.

Drive system 6 of thinner device 3 permits controlling and changing the thinning of the vegetative elements. In fact, said drive system 6 is capable of varying the speed of remover elements 5, and hence the action exerted by said remover elements 5 on the vegetative elements.

Thinner device 3 according to the present invention permits making the traveling speed of thinner device 3, e.g. along a row of trees, independent of the thinning action to be exerted on the vegetable plant, since it is possible to set the desired thinning action independently of the traveling speed of thinner device 3. Moreover, thinner device 3 can be conveniently programmed to always exert the same thinning action, compensating for any changes occurring in the surrounding environment.

Thinner device 3 can exert the same thinning action on all the vegetable plants comprised in a row, independently of their position in the row.

Thinner device 3 according to the present invention makes it possible to work on different vegetative elements and/or different vegetable plants without having to change remover elements 5, since their action on the vegetative elements can be adjusted via said drive system 6.

Thinner device 3 according to the present invention allows imparting an oscillatory motion to remover elements 5 only, thus reducing the risk of propagation of vibratory motions which might cause resonance of the structure of thinner device 3.

The second mechanism 7 according to the present invention reduces all possible vibrations and permits obtaining a reliable thinner device wherein at any revolution speed of both body 4 and remover elements 5, and at any oscillation frequency, can cause said remover elements to oscillate in a reciprocating fashion harmoniously along the motion stroke, without any jamming or interruption or reduction of the stroke of the oscillatory motion.

Any embodiments which have not been described herein, but which can be easily inferred by a person skilled in the art in light of the present description and the annexed drawings, shall be considered to fall within the protection scope of the present invention as defined by the appended claims.

**REFERENCE NUMERALS**

| | |
|---|---|
| Agricultural machine | 1 |
| Main frame | 12 |
| Support frame | 14 |
| Thinner device | 3 |
| Body | 4 |
| External structure | 41 |
| Remover elements | 5 |
| Connection portion | 50 |
| Support structure | 52 |
| Drive system | 6 |
| Control unit | 60 |
| First mechanism | 65 |
| Motor | 66 |
| Junction portion | 67 |
| Second mechanism | 7 |
| Shaft | 71 |
| Kinematic mechanism | 72 |
| Eccentric element | 73 |
| Rod | 74 |
| Connection linkage | 75 |
| First junction element | 751 |
| Second junction element | 752 |
| Motor | 76 |
| Longitudinal axis | "L" |
| Sensors | "S" |
| Control keyboard | "B" |
| Axis | "X" |
| Pivot | "P" |

## Claims

1. Thinner device (3) for thinning out vegetative elements protruding from branches of vegetable plants, in particular fruit trees;
said thinner device (3) comprising:
- a body (4), extending substantially along an axis (X), comprising an external structure (41);
- a plurality of remover elements (5), adapted to act upon vegetative elements for thinning them out; said remover elements (5) projecting from said body (4), thereby defining a respective longitudinal axis (L);
- a drive system (6), which in turn comprises:
- at least one first mechanism (65) adapted to cause at least said body (4) and said remover elements (5) to rotate in a controlled and assisted manner relative to said axis (X);
- at least one second mechanism (7) adapted to cause each remover element (5) to oscillate relative to said external structure (41) of the body (4) about a respective axis;
said thinner device (3) being **characterized in that** said second mechanism (7) comprising:
- a shaft (71) extending along said axis (X) and being adapted to rotate about said axis (X);
- a kinematic mechanism (72), connected between said shaft (71) and said remover elements (5), being adapted to cause each remover element (5) to oscillate about a respective axis.

2. Device according to claim 1, wherein each remover element (5) comprising a connection portion (50);
said connection portion (50) being pivoted to the external structure (41) in a manner such that said remover element (5) will oscillate about a pivot axis (P).

3. Device according to claim 2, wherein said remover element (5) oscillating about an axis substantially perpendicular to the longitudinal axis (L) of each remover element (5).

4. Device according to one of the preceding claims, wherein said plurality of remover elements (5) being divided into groups;
each group being fixed to a respective support structure (52) ;
each support structure (52) being pivoted to the external structure (41) in a manner such that it will oscillate about a pivot axis (P).

5. Device according to one of the preceding claims, wherein said kinematic mechanism (72) comprises:
- a plurality of eccentric elements (73) suitably arranged along said shaft (71);
- a plurality of rods (74), each one connected to a respective eccentric element (73) and protruding along a direction substantially perpendicular to said shaft (71);
- a plurality of connection linkages (75), each one being connected at one end to a rod (74) and at the opposite end to at least one remover element (5);
the rotary motion of said shaft (71) is appropriately converted by said kinematic mechanism (72) in order to cause said remover elements (5) to oscillate.

6. Device according to claim 5, wherein each connection linkage (75) comprising:
- a first junction element (751), adapted to compensate for any variations in the axis of the rod (74) during the movement imparted thereon by said eccentric element (73), thereby obtaining a purely linear reciprocating motion, perpendicular to said axis (X);
- at least one second junction element (752), adapted to transmit the linear motion to said at least one remover element (5), thereby causing it to oscillate.

7. Device according to claim 5 or 6, wherein each one of said connection linkages (75) being connected at one end to a rod (74) and at the opposite end to at least one support structure (52), which is pivoted to the external structure (41) in a manner such that it can oscillate about a pivot axis (P), thereby causing the oscillation of a group of said remover elements (5) fixed to said support structure (52).

8. Device according to one of the preceding claims, wherein said at least one first mechanism (65) and said at least one second mechanism (7) are so designed that the period of rotation of said remover elements (5) relative to said axis (X) is greater than the period of an oscillation of the same remover elements (5) relative to said external structure (41) of the body (4).

9. Device according to one of the preceding claims, wherein said at least one second mechanism (7) is designed in a manner such that said remover elements (5) will move discordantly, but in mutual static balance.

10. Device according to claims 7 and 9, wherein said connection linkage (75) comprises two second junction elements (752);
each second junction element (752) being adapted to transmit the linear motion to a respective support structure (52), which is pivoted to the external structure (41) in a manner such that it will oscillate about an axis of a respective pivot (P);
said connection linkage (75) being adapted to cause both groups of said remover elements (5) fixed to said support structures (52) to oscillate in opposite directions of rotation.

11. Device according to one of claims 5 and 9, wherein said plurality of eccentric elements (73) are arranged along said shaft (71) in a manner such that the motion imparted through each eccentric element (73) will be counterbalanced by at least one other eccentric element (73) arranged along said shaft (71), thereby balancing said second mechanism (7).

12. Agricultural machine (1) for working on branches of vegetable plants, in particular fruit trees;
said agricultural machine (1) comprising:
- a main frame (12), which is susceptible of being connected to a vehicle, in particular an agricultural tractor;
- a support frame (14);
- a thinner device (3);
said support frame (14) being configured for supporting the thinner device (3), wherein said thinner device (3) is made in accordance with claim 1.

## Patentansprüche

1. Ausdünnungsvorrichtung (3) zum Ausdünnen von vegetativen Elementen, die aus Zweigen von Gemüsepflanzen, insbesondere Obstbäumen, herausragen;
wobei die Ausdünnvorrichtung (3) aufweist:
- einen Körper (4), der sich im Wesentlichen entlang einer Achse (X) erstreckt und eine äußere Struktur (41) aufweist;
- eine Vielzahl von Entferner-Elementen (5), die ausgebildet sind, auf pflanzliche Elemente einzuwirken, um sie auszudünnen; wobei die Entferner-Elemente (5) von dem Körper (4) vorstehen und dadurch eine jeweilige Längsachse (L) definieren;
- ein Antriebssystem (6), das seinerseits aufweist:
- mindestens einen ersten Mechanismus (65), der ausgebildet ist, mindestens den Körper (4) und die Entferner-Elemente (5) zu veranlassen, sich in einer kontrollierten und unterstützten Weise relativ zu der Achse (X) zu drehen;
- mindestens einen zweiten Mechanismus (7), der ausgebildet ist, jedes Entferner-Elemente (5) zu veranlassen, relativ zu der äußeren Struktur (41) des Körpers (4) um eine entsprechende Achse zu schwingen;
wobei die Ausdünnvorrichtung (3) **dadurch gekennzeichnet ist, dass** der zweite Mechanismus (7) aufweist:
- eine Welle (71), die sich entlang der Achse (X) erstreckt und so ausgebildet ist, dass sie sich um diese Achse (X) dreht;
- einen kinematischen Mechanismus (72), der zwischen der Welle (71) und den Entferner-Elementen (5) verbunden ist und so ausgebildet ist, dass er jedes Entferner-Element (5) veranlasst, um eine jeweilige Achse zu schwingen.

2. Vorrichtung nach Anspruch 1, wobei jedes Entferner-Element (5) einen Verbindungsabschnitt (50) aufweist;
wobei der Verbindungsabschnitt (50) so an der äußeren Struktur (41) angelenkt ist, dass das Entferner-Element (5) um eine Schwenkachse (P) schwingen schwingt.

3. Vorrichtung nach Anspruch 2, wobei das Entferner-Element (5) um eine Achse schwingt, die im Wesentlichen senkrecht zur Längsachse (L) jedes Entferner-Elements (5) verläuft.

4. Vorrichtung nach einem der vorhergehenden Ansprüche, wobei die Vielzahl von Entferner-Elementen (5) in Gruppen unterteilt ist;
wobei jede Gruppe an einer entsprechenden Trägerstruktur (52) befestigt ist;
wobei jede Trägerstruktur (52) so an der äußeren Struktur (41) angelenkt ist, dass sie um eine Schwenkachse (P) schwingt.

5. Vorrichtung nach einem der vorhergehenden Ansprüche, wobei der kinematische Mechanismus (72) aufweist:
- eine Vielzahl von exzentrischen Elementen (73), die in geeigneter Weise entlang der Welle (71) angeordnet sind;
- eine Vielzahl von Stangen (74), von denen jede mit einem entsprechenden exzentrischen Element (73) verbunden ist und entlang einer Richtung im Wesentlichen senkrecht zu der Welle (71) vorsteht;
- eine Vielzahl von Verbindungsgestängen (75), die jeweils an einem Ende mit einer Stange (74) und am gegenüberliegenden Ende mit mindestens einem Entferner-Elemente (5) verbunden sind;
wobei die Drehbewegung der Welle (71) durch den kinematischen Mechanismus (72) in geeigneter Weise umgewandelt wird, um die Entferner-Elemente (5) zum Schwingen zu bringen.

6. Vorrichtung nach Anspruch 5, wobei jedes Verbindungsgestänge (75) Folgendes aufweist:
- ein erstes Verbindungselement (751), das so ausgebildet ist, dass es eventuelle Achsveränderungen der Stange (74) während der auf diese durch das exzentrische Element (73) ausgeübten Bewegung kompensiert, wodurch eine rein lineare Hin- und Herbewegung senkrecht zur Achse (X) erzielt wird;
- mindestens ein zweites Verbindungselement (752), das so ausgebildet ist, dass es die lineare Bewegung auf das mindestens eine Entferner-Element (5) überträgt und es dadurch in Schwingung versetzt.

7. Vorrichtung nach Anspruch 5 oder 6, wobei jedes der Verbindungsgestänge (75) an einem Ende mit einer Stange (74) und am gegenüberliegenden Ende mit mindestens einer Trägerstruktur (52) verbunden ist, die so an der äußeren Struktur (41) angelenkt ist, dass sie um eine Schwenkachse (P) schwingen kann, wodurch die Schwingung einer Gruppe der an der Trägerstruktur (52) befestigten Entferner-Elemente (5) bewirkt wird.

8. Vorrichtung nach einem der vorhergehenden Ansprüche, wobei der mindestens eine erste Mechanismus (65) und der mindestens eine zweite Mechanismus (7) so ausgebildet sind, dass die Periode der Drehung der Entferner-Elemente (5) relativ zur Achse (X) größer ist als die Periode einer Schwingung der gleichen Entferner-Elemente (5) relativ zur äußeren Struktur (41) des Körpers (4).

9. Vorrichtung nach einem der vorhergehenden Ansprüche, wobei der mindestens eine zweite Mechanismus (7) so ausgebildet ist, dass sich die Entferner-Elemente (5) unharmonisch, aber im gegenseitigen statischen Gleichgewicht bewegen.

10. Vorrichtung nach einem der Ansprüche 7 und 9, wobei das Verbindungsgestänge (75) zwei zweite Verbindungselemente (752) aufweist;
wobei jedes zweite Verbindungselement (752) ausgebildet ist, die lineare Bewegung auf eine entsprechende Trägerstruktur (52) zu übertragen, die an der äußeren Struktur (41) so angelenkt ist, dass sie um eine Achse eines entsprechenden Drehpunkts (P) schwingt;
wobei das Verbindungsgestänge (75) ausgebildet ist, beide Gruppen der an den Trägerstrukturen (52) befestigten Entferner-Elemente (5) in entgegengesetzte Drehrichtungen schwingen zu lassen.

11. Vorrichtung nach einem der Ansprüche 5 und 9, wobei die mehreren exzentrischen Elemente (73) entlang der Welle (71) so angeordnet sind, dass die durch jedes exzentrische Element (73) übertragene Bewegung durch mindestens ein anderes exzentrisches Element (73), das entlang der Welle (71) angeordnet ist, ausgeglichen wird, wodurch der zweite Mechanismus (7) ausgeglichen wird.

12. Landwirtschaftliche Maschine (1) zum Bearbeiten von Zweigen von Gemüsepflanzen, insbesondere von Obstbäumen;
wobei die landwirtschaftliche Maschine (1) aufweist:
- einen Hauptrahmen (12), der mit einem Fahrzeug, insbesondere einem landwirtschaftlichen Traktor, verbunden werden kann
- einen Tragrahmen (14);
- eine Ausdünnvorrichtung (3);
wobei der Tragrahmen (14) zum Tragen der Ausdünnvorrichtung (3) konfiguriert ist, wobei die Ausdünnvorrichtung (3) gemäß Anspruch 1 hergestellt ist.

## Revendications

1. Dispositif d'éclaircissage (3) pour éclaircir des éléments végétaux faisant saillie à partir de branches de plantes potagères, en particulier d'arbres fruitiers ;
ledit dispositif d'éclaircissage (3) comprenant :
- un corps (4), s'étendant sensiblement le long d'un axe (X), comprenant une structure externe (41) ;
- une pluralité d'éléments d'enlèvement (5), adaptés pour agir sur des éléments végétaux pour les éclaircir ; lesdits éléments d'enlèvement (5) faisant saillie depuis ledit corps (4), en définissant ainsi un axe longitudinal respectif (L) ;
- un système d'entraînement (6), qui comprend à son tour :
- au moins un premier mécanisme (65) adapté pour amener au moins ledit corps (4) et lesdits éléments d'enlèvement (5) à tourner d'une manière commandée et assistée par rapport audit axe (X) ;
- au moins un second mécanisme (7) adapté pour amener chaque élément d'enlèvement (5) à osciller par rapport à ladite structure externe (41) du corps (4) autour d'un axe respectif ; ledit dispositif d'éclaircissage (3) étant **caractérisé en ce que** ledit second mécanisme (7) comprend :
- un arbre (71) s'étendant le long dudit axe (X) et étant adapté pour tourner autour dudit axe (X) ;
- un mécanisme cinématique (72), relié entre ledit arbre (71) et lesdits éléments d'enlèvement (5), étant adapté pour amener chaque élément d'enlèvement (5) à osciller autour d'un axe respectif.

2. Dispositif selon la revendication 1, dans lequel chaque élément d'enlèvement (5) comprend une partie de liaison (50) ; ladite partie de liaison (50) étant pivotée sur la structure externe (41) de telle sorte que ledit élément d'enlèvement (5) oscille autour d'un axe de pivotement (P).

3. Dispositif selon la revendication 2, dans lequel ledit élément d'enlèvement (5) oscille autour d'un axe sensiblement perpendiculaire à l'axe longitudinal (L) de chaque élément d'enlèvement (5).

4. Dispositif selon l'une quelconque des revendications précédentes, dans lequel ladite pluralité d'éléments d'enlèvement (5) est divisée en groupes ;
chaque groupe étant fixé à une structure de support respective (52) ;
chaque structure de support (52) étant pivotée par rapport à la structure externe (41) d'une manière telle qu'elle va osciller autour d'un axe de pivotement (P).

5. Dispositif selon l'une quelconque des revendications précédentes, dans lequel ledit mécanisme cinématique (72) comporte :
- une pluralité d'éléments excentriques (73) agencés de manière appropriée le long dudit arbre (71) ;
- une pluralité de tiges (74), chacune étant reliée à un élément excentrique respectif (73) et faisant saillie le long d'une direction sensiblement perpendiculaire audit arbre (71) ;
- une pluralité de tringlerie de liaison (75), chacune étant reliée au niveau d'une extrémité à une tige (74) et au niveau de l'extrémité opposée à au moins un élément d'enlèvement (5) ;
le mouvement de rotation dudit arbre (71) est converti de manière appropriée par ledit mécanisme cinématique (72) afin d'amener lesdits éléments d'enlèvement (5) à osciller.

6. Dispositif selon la revendication 5, dans lequel chaque tringlerie de liaison (75) comprend :
- un premier élément de jonction (751), adapté pour compenser toute variation de l'axe de la tige (74) pendant le déplacement qui lui est imparti par ledit élément excentrique (73), en obtenant ainsi un mouvement de va-et-vient purement linéaire, perpendiculaire audit axe (X) ;
- au moins un second élément de jonction (752), adapté pour transmettre le mouvement linéaire audit au moins un élément d'enlèvement (5), en l'amenant ainsi à osciller.

7. Dispositif selon la revendication 5 ou 6, dans lequel chacune desdites tringleries de liaison (75) est reliée à une extrémité à une tige (74) et à l'extrémité opposée à au moins une structure de support (52), qui est pivotée sur la structure externe (41) d'une manière telle qu'elle peut osciller autour d'un axe de pivotement (P), en provoquant ainsi l'oscillation d'un groupe desdits éléments d'enlèvement (5) fixés à ladite structure de support (52).

8. Dispositif selon l'une quelconque des revendications précédentes, dans lequel ledit au moins un premier mécanisme (65) et ledit au moins un second mécanisme (7) sont conçus de sorte que la période de rotation desdits éléments d'enlèvement (5) par rapport audit axe (X) est supérieure à la période d'une oscillation des mêmes éléments d'enlèvement (5) par rapport à ladite structure externe (41) du corps (4).

9. Dispositif selon l'une quelconque des revendications précédentes, dans lequel ledit au moins un second mécanisme (7) est conçu de telle sorte que lesdits éléments d'enlèvement (5) se déplacent de manière discordante, mais en équilibre statique mutuel.

10. Dispositif selon les revendications 7 et 9, dans lequel ladite tringlerie de liaison (75) comprend deux seconds éléments de jonction (752) ;
chaque second élément de jonction (752) étant adapté pour transmettre le mouvement linéaire à une structure de support respective (52), qui est pivotée sur la structure externe (41) d'une manière telle qu'elle va osciller autour d'un axe d'un pivot respectif (P) ;
ladite tringlerie de liaison (75) étant adaptée pour amener les deux groupes desdits éléments d'enlèvement (5) fixés auxdites structures de support (52) à osciller dans des directions de rotation opposées.

11. Dispositif selon l'une quelconque des revendications 5 et 9, dans lequel ladite pluralité d'éléments excentriques (73) est agencée le long dudit arbre (71) d'une manière telle que le mouvement imparti à travers chaque élément excentrique (73) sera contrebalancé par au moins un autre élément excentrique (73) agencé le long dudit arbre (71), en équilibrant ainsi ledit second mécanisme (7) .

12. Machine agricole (1) pour travailler sur des branches de plantes potagères, en particulier des arbres fruitiers ;
ladite machine agricole (1) comprenant :
- un châssis principal (12), qui est susceptible d'être relié à un véhicule, en particulier un tracteur agricole ;
- un châssis de support (14) ;
- un dispositif d'éclaircissage (3) ;
ledit châssis de support (14) étant configuré pour supporter le dispositif d'éclaircissage (3), dans lequel ledit dispositif d'éclaircissage (3) est fabriqué conformément à la revendication 1.
